# EUROPEAN PATENT APPLICATION

(11) **EP 1 961 294 A2**
(43) Date of publication of application: **27.08.2008**
(21) Application number: 08151680.9
(22) Date of filing: 20.02.2008
(51) Int. Cl.: A01K 11/00

(54) **Device for fixing ear tags**

(30) Priority: 20.02.2007 DK 200700266
(71) Applicant: Jelle, Svend, 8900 Randers (DK)
(72) Inventor: Jelle, Svend, 8900 Randers (DK)
(74) Representative: Tellefsen, Jens J.

(57) **Abstract**

A device for fixing ear tags to an animal's ear (1). The device comprises a u-shaped frame (3) with a base section (2) and a support section (4), a lever (6) pivotally attached to the frame (3). The frame has an aperture (10), through which aperture (10) a punch rod (8) can move up and down. The punch rod (8) is pivotally attached to the lever (6). The devise furthermore comprises axle means (16) suitable for fastening a tag storage member (18) to the frame (3) in such a manner that the tag storage member (18) to rotate about said axle means (16). By this way it is possible to simplify the action of fitting an ear tag (26) in an animal's ear (1). The rotation of the tag storage member (18) and the herby the tags (26) can be performed quick and precise and independent of gravity.

## Description

### Field of the Invention

The present invention relates to a device for fixing ear tags to an animal's ear, where said device comprises a u-shaped frame with a base section and a support section, a lever pivotally attached to the base section, an aperture in one of the sections, through which aperture a punch rod can move up and down, where said punch rod is pivotally attached to the lever.

### Background of the Invention

Ear tags are frequently used for the identification of livestock. Several attempts have been made to provide a device for fixing ear tags.

WO 9 414 316 discloses a dispensing device for applying two-part ear tags to animals comprises a housing having a handle, there being inserted in a storage chamber of the housing a removable cartridge containing two spaced rows of tag parts which are fed by a spring device to an operating location. Squeezing a lever upwardly into the handle drives a plunger downwardly into the operating location so as to disengage an upper tag part from its position in the cartridge and drive it through the animal's ear and into engagement with the corresponding lower tag part in the cartridge, so that the two-part tag becomes affixed to the animal's ear. The transmission between the lever and the plunger comprises a pinion device which is rotatably mounted on the body of the device and meshes with toothed racks on the lever and plunger respectively.

US 4 943 294 discloses a tagging device, such as for ears of livestock, driven by a pressurized fluid source is disclosed. The manually controlled pneumatic applicator described utilizes pressurized air for activation to pierce the ear and set the tag as well as retract the piercing element. The applicator is particularly adapted for use with either one-piece or multiple-piece tags.

DE 100 01 176 discloses an instrument for fitting an animal ear tag has two holders for the two components of the ear tag. They are pressed together by two levers where the drive force on the levers is converted into the take-off drive by a combined flat lever mechanism. The lever system has a toggle lever and a further coupling. The toggle lever is mounted in the instrument housing so that it has a rotary movement and also a relative movement to the housing, and the swing movement of the drive lever is transmitted to the toggle lever through the pawl and the coupling.

DE 199 39 277 discloses a device for fixing tags in the ears of farm animals has a pneumatic system built into the handgrip. This drives a pin down through an upper magazine holding tags, through the ear and into the tag fastener which is held in a lower magazine. All components are attached directly or indirectly to the hand grip.

EP 0 138 570 discloses an applicator tool for applying an ear tag to an animal, the applicator having retention means which is adapted to, in use, retain a part of an ear tag and pass it through an animal's ear. The applicator includes means for engagement of an animal's ear on a side opposite that to which the retention means first penetrates the ear and means to cause relative movement of the retention means and engagement means toward one another. The engagement means are adapted to cause at least a portion of the ear tag part retained by the retention means to be compacted during passage through the ear of an animal.

WO 0 032 036 discloses a tongs for fixing of an ear tag on a live animal comprise two jaws which are designed to carry a female part and a male part, respectively, of the ear tag and to press together the female part and the male part. The tongs comprise a motor, a driving connection between the motor and the jaws, an activation device for the motor, and a control device to ensure that the jaws after activation run through a cycle, by which the jaws close and open again.

US 6 053 926 is considered to be the closest prior art. US 6 053 926 discloses an apparatus for fitting ear tags in animal ears. The device serves to distinguish animals, especially pigs. According to the invention two magazines are provided for ear tag parts, which slide down in the magazines. The one ear tag part is removed from the magazine by a punch, which is actuated by a pedal, pushed through the animal's ear and connected to the other ear tag part. The ear tag parts are held before this fitting operation in positioning means arranged below the magazines and arranged thereby in fitting positions. This invention relates to an apparatus for fitting ear tags in animal ears, wherein the ear tags comprise a first part provided with a pin and a second part. This invention suffers from the drawback that two tag parts are required. The device is very vulnerable to the proper positioning of the tag parts with respect to each other. Another drawback of the present invention is that the magazines are provided for ear tag parts, which slide down into the magazines through gravity. Thus it is only possible to use the devise when it is turned in the correct direction.

### Object of the Invention

It is an object of the present invention to specify a device for fixing ear tags to an animal's ear that is easy and quick to use. It is a further object of the present invention to specify a device that simplifies the action of fitting the ear tags in the animal's ears. This can be achieved by using a device applying a one-part tag. It is a further object of the present invention to specify a device that can be handled with one hand - providing scope for a purely manually operated tagging device. Other advantages of the present invention and the specific embodiments thereof will become apparent in the following disclosure of the invention.

### Description of the Invention

The objects of the present invention can be accomplished by a device as described in the introductory part of claim 1 and further explained in "Field of the Invention" that is characteristic in that, axle means suitable for fastening a tag storage member is mounted to said frame enabling the tag storage member to rotate about said axle means. In this manner it is possible to simplify the action of fitting the ear tags in the animal's ears. The rotation of the storage member and hence the tags can be performed quickly, precise and independent of gravity. The present invention thus offers a useful alternative to the use of eat tag parts sliding in magazines by means of gravity as described in the prior art.
A long lever may be advantageous because it is equivalent to a long torque arm, which will provide a mechanical advantage. Therefore, in a further particular preferred embodiment of the present invention, one may make use of a long lever arm, which will provide scope for a purely manually operated tagging device.

The word u-shaped as used in the present application is taken to mean any frame that includes two opposite and approximately parallel sections connected by a frame body. The frame could therefore take many special shapes. When the frame body is a straight plate the cross section of the frame forms a rectangle with one missing side. In a particular embodiment of the present invention, the base frame and the support frame constitute one frame unit.

In a particular preferred embodiment of the present invention, the tag storage member can be rotated about an axle perpendicular to the base section and the support section and parallel to the punch rod. Such arrangement will be beneficial because the tags will rotate in a plane parallel to the support section. This kind of arrangements will eliminate problems with friction due to unintended contact between the frame and the tags.

In a particular favoured embodiment of the present invention, the punch rod is biased against the frame by a resilient member. A resilient member could be any deformable material capable of storing up potential energy during deformation. By applying a punch rod that is biased against the frame by a resilient member the lever will be returned to its initial position when a ear tag is fixed. Hereby is obtained a desirable position of the lever. In a preferred embodiment of the present invention, the resilient member could be a helical retracting spring. The retracting spring is used to store up potential energy concurrently with the spring flexion in the process of the rotation of the lever during operation of the tagging device. The potential energy can subsequently push the lever back to its initial position. The retracting spring may furthermore prevent operational slackness causing unintentional wear rate due to friction between the punch rod and the aperture in the base section of the frame. The retracting spring can i.e. be made out of metal; however, other materials can also be applied.

In a particular preferred embodiment of the present invention, a bushing encases the aperture in the frame. When the frame is made of metal, the aperture may be provided with a soft bushing such as plastic to prevent damage to the punch rod and the surrounding retracting spring. A bushing can prevent operational slackness concerning the motion of the punch rod with or without a surrounded helical retraction spring. This kind of slackness can cause unintended wear due to friction. The bushing will also have a stabilizing effect on the punch rod with regard to lateral motion. Moreover, the bushing may secure a steady control of the punch rod, when it is moved up and down through the frame aperture. Furthermore, it is an advantage to have the possibility to replace the bushing in case of wear. The bushing may extend beyond the aperture. By this way it is possible to secure a steady control of the punch rod in a great part of its range of movement.

In a favoured embodiment of the present invention, the punch rod includes load transfer means. The load transfer means will secures a smoothly transfer of load from the punch rod to the tag. Furthermore, the load transfer means protects the tag from being subject to excessive stress loading due to vertical stress caused by the punch rod. Load transfer means can be any kind of means capable of transferring the load from the punch rod to the upper plate of the tag. However, in a particular preferred embodiment of the present invention, the load transfer means comprises a clamping plate. By clamping plate as used in the present application is taken to mean any kind of plate that can be used to transfer the load from the punch rod to the tag to be fixed. The clamping plate can be rectangular, round or take any other geometrical form. The plate can be flat or curved. In a particular preferred embodiment of the present invention, the load transfer means comprises a clamping plate equipped with a stop flange attached at (or near) the very edge of upper plate of the tag.

In a favoured embodiment of the present invention, a spacer pipe is applied to ensure a fixation of the bushing when the load transfer means (i.e. a clamping plate) is pushed against the tag. The spacer pipe can be attached to the frame in order to avoid undue motion of the spacer pipe during operation of the punch rod. The tagging device may consist of several interchangeable spacer pipes with different length. By this way it is possible to apply different kinds of tags. The spacer pipe can be produced in several materials including metal and plastic.

In a particular favoured embodiment of the present invention, the frame incorporates a recess. Preferable the recessed region in the frame is located either in the support section is located vertically under the tag spike attached to the base section or alternatively in the base section vertically over the tag spike attached to the support section. By this way the spike can be attached to the opposite side of the tag during the action of fitting ear tags in the animal's ears.

In a preferred embodiment of the present invention, the support section of the frame incorporates at least one guide groove. A guide grove will provide for a mechanical guiding of the tags during the rotation of the tag storage member. The guide grove will both support and drive the storage member as regards the rotation of the tag storage member. It is feasible to arrange a recess in the guide grove in the frame. The recess can accommodate the head of a tag spike. The guide my preferable be circular or consist of one ore more circle sectors. By this way the guide grove will provide for a mechanical guiding of the tags during the rotation of the tag storage member. The depth of the guide groove may benefit from being adapted to the shape of the tags.

In a preferred embodiment of the present invention, an actuator is connected to the lever in order to provide for the lever rotation required in order to move the punch rod downwards. The actuator can be driven by different kinds of means or energy sources. In a favoured embodiment of the present invention, the actuator is pneumatic or hydraulic; on the other hand, an electrical activator could also be applied. The actuator could be attached directly to the lever at the axle of rotation. Another way to provide the required transmission of power is to connect the actuator to the axle of rotation by a gear wheel, a chain drive or similar. In case of an actuator, the activation of said actuator could be triggered by the motion of the lever. By this way it is possible to maintain a manual lever motion based control action. In other words the tagging action can be performed in the same way regardless of the presence of an actuator.

Applying axle means suitable for fastening a tag storage member rotatably mounted to the frame will enable the tag storage member to rotate about said axle means. Hereby the tagging of an animal can be performed quickly and precisely and independent of gravity. The storage member must preferably include an annular arrangement having a centrally placed aperture, in which annular arrangement one or more loose-fitted tags can be placed radially from the aperture such that the punch rod of the tagging device is vertically arranged over or under an extremity of a tag. Holes in the annular arrangement may permit the punch rod to be driven downwardly into the tag causing a fixing of the tag to the animal's ear. Alternatively the tags may project beyond the annular arrangement in such a manner that the punch rod to be driven downwardly into the tag without getting in physical contact with the annular arrangement. It is possible to apply an annular arrangement, in which the tags can be inserted i.e. manually. It is, however, also an option to apply replaceable annular arrangements containing several tags.

In a particular favoured embodiment of the present invention, the tag storage member is adapted to rotate about said axle means by means of an actuator. This actuator can be driven by several energy sources. It could i.e. be a pneumatic, hydraulic or electric actuator. The rotation of the storage member should preferable be triggered by the motion of the lever or punch rod in such a way that the tags are positioned in the optimal position for fixing.

In a still further preferred embodiment of the present invention, the tag used is u-shaped and includes a tag spike, where said spike is placed perpendicular to and adjacent to a free end of the u-shaped tag, where a tag aperture is provided adjacent to the other free end of the u-shaped tag, where the spike points towards the tag aperture, where the tag is adapted to be placed in a position in which the punch rod is superposed on the tag spike. A tag produced in accordance with these guidelines is very useful for tagging. The fact that the tag only involves one part simplifies the action of fitting the ear tags in the animal's ears as compared to other methods applying two-part ear tags. In addition to this the one-part tag provides improvement in safety because the degree of uncertainty is reduced by applying a one-part tag instead of a two-part tag, wherein the two parts must be positioned precise relative to each other. It will be beneficial to place the tag spike under the punch rod. Hereby is obtained a direct transmission of power from the punch rod to the tag spike.

In a particular embodiment of the present invention, the spike is formed as a barbed arrow head. This shape will facilitate an efficient fixing of the tag. The spike could be fixed to the opposite side of the tag in a snap lock.

In another embodiment of the present invention, the tag is attached to the annular arrangement. This could be advantageous when the upper plate of a tag is attached to the annular arrangement because release of the tag (from the annular arrangement) would proceed easier during compression of the tag.

The tags may be produced in various materials. However, it would be beneficial to use a flexible and/or plastic material or another material that may minimize scratching among the animals in the case of livestock. The tag spike may be attached to the aperture side of the tag. The aperture side of the tag may preferably include a reinforced plate.

The spike may be barbed in order to secure an appropriate and permanent fixing of the tags. Attaching the tags loose-fitted will secure easy release of the tags from the storage member and hence excellent conditions for tag fixing.

An apparatus for making tags and tag storage members in according to present invention may comprise injection moulding means shaped and arranged to produce said tags loose-fitted to at least one storage member. By this way it is possible to provide a fast and effective production of tags and tag storage members. Plastic may be one of the favoured tag and storage member materials. However, it is possibly to apply other materials. It would be beneficial to use a flexible and robust that would minimize scratching.

In a particular preferred embodiment of the present invention, a rotation unit is connected to the frame. The rotation unit may comprise several parts including an actuator and a controller. The rotation unit may hereby provide for the required rotation of the tag storages member. Rotation may be triggered by the motion of the lever. By this way a proper tag position can be achieved prior to each tagging. It is also possible to trigger the rotation of the storage member by the return movement of the lever. By connecting a control unit to the rotation unit it is possibly to operate the tagging devise by the way of choice. In a particular favoured embodiment of the present invention, the rotation unit comprises an actuator. The actuator can be driven by different kinds of means or energy sources. In one embodiment of the present invention, the actuator is pneumatic or hydraulic. The actuator an also be electrical. The actuator could be attached directly to the axle of rotation, however, the required transmission of power could also be provided by connecting the actuator to the axle of rotation by a gear wheel, a chain drive or similar.

A method fixing ear tags to an animal's ear, wherein the method includes:
- placing the animals ear between the free ends of a u-shaped tag or between the free ends of a tag arranged in a storage member in such a manner that the punch rod of the tagging device is vertically arranged over an extremity of a tag and the punch rod is superposed above the tag having a spike arranged perpendicular and adjacent to a free end of the tag;
- squeezing the punch rod in a direction against the ear by which the spike of the ear tag will perforate the ear and the tag aperture to be affixed to the tag aperture and;
- releasing the pressure on the lever in order to let the lever return to its initial position and thereby releasing the ear of the animal.

This procedure/method has several upsides. First of all the action of fixing the tag is quick and does not depend on the orientation of the tagging device. Moreover, in the case where the tagging device applies actuators it is possible to perform a precise and easy fixing of ear tags with a minimum of work.

The axle means suitable for fastening a tag storage member may be rotatably mounted to one or more sections of the frame. As long at the tag storage member can rotate about the axle means and the axis of rotation is perpendicular to the support section, the invention will operate as intended. Accordingly, there axle means may be fixed to one or more of the frame sections. However, it can be advantageous to fix the axle means to both the base section and the support section in order to provide for lateral stability of an axle of rotation.

The invention is not limited to the described embodiments which can be modified in many ways. This applies in particular to the shape and the materials of the ear tags, the punch rod, the lever and the cross-sections profiles of the base section and a support section of the frame.

### Description of the Drawing

Figure 1 is a cross-sectional view of the devise.
Figure 2 is a front view of the tag storage member.

### Detailed Description of the Invention

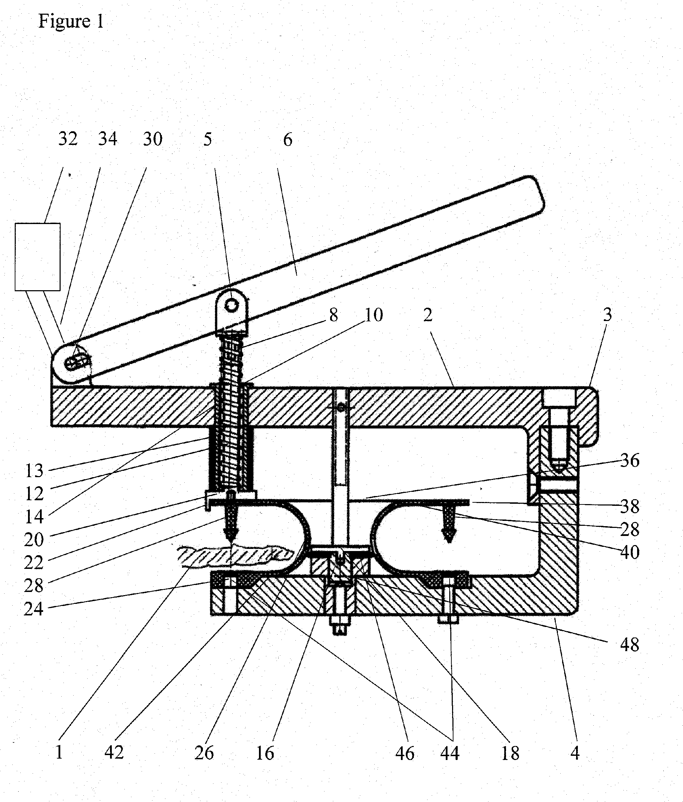

Figure 1 shows an embodiment of the present invention. The device for fixing ear tags to an animal's ear comprises a frame (3) consisting of a base section (2) and a support section (4). A lever (6) is pivotally attached to the base section (2) of the frame (3). A punch rod (8) is pivotally attached to the lever (6). The punch rod (8) can move up and down through an aperture (10) in the base section (2) of the frame (3). The punch rod (8) is surrounded by a helical retracting spring (12), which extends the aperture. A bushing (14) encases the aperture (10). A spacer pipe (13) encloses the bushing (14). The punch rod (8) encompasses a clamping plate (20) to transfer the load from the punch rod (8) to the spike side (40) of the tag (26). The clamping plate (20) has a flange (22) that supports the tag (26) prior to fixing. Axle means (16) suitable for fastening a tag storage member (18) is rotatably attached to the support section (4) enabling the tag storage member (18) to rotate the about the axle means (16). The tags (26) are attached to an annular arrangement (36). The tag (26) comprises a spike side (40) and a reinforced tag aperture side (42) with a tag aperture (44). The spike side includes a tag spike (28) and an edge (38). The storage member body (46) is centrally attached to the axle means (16). The tags (26) are attached to the storage member body (46). A lever actuator (30) is applied to rotate the lever (6). The actuator is connected to an energy source (32) via a connection (34). The animal's ear (1) is placed between the free ends of the tag (26). A rotation unit (48) is connected to the axle means (16) in order to provide for the required rotation of the tag storages member (18).

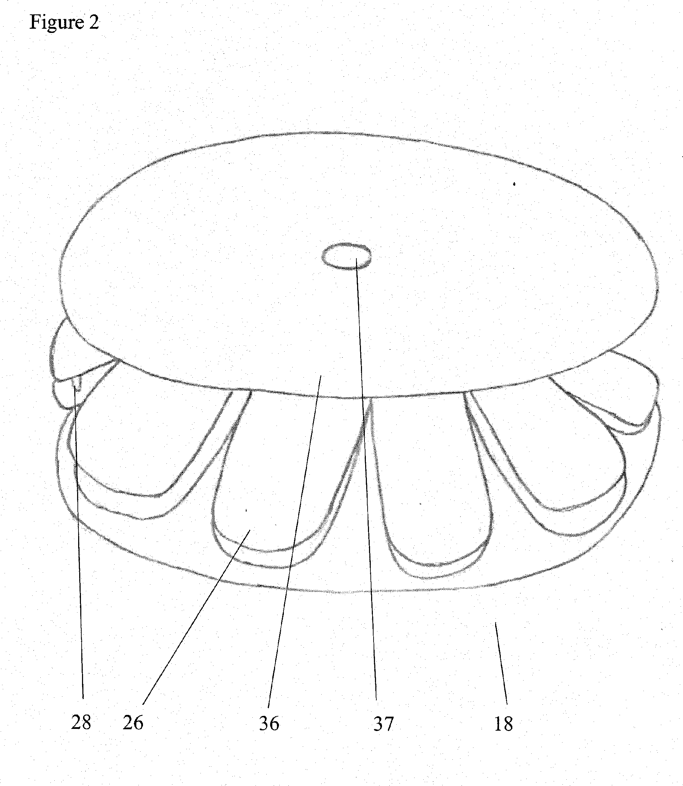

Figure 2 shows an embodiment of the tag storage member (18). The storage member (18) includes an annular arrangement (36) having a centrally placed aperture (37), in which annular arrangement (36) one or more loose-fitted tags (26) are placed radially from the aperture (37) such that the punch rod (not shown) of the tagging device may be vertically arranged over or under an extremity of a tag (26). The tags (26) comprise spikes (28) and apertures (not shown) for tag fixing.

## Claims

1. A device for fixing ear tags to an animal's ear (1), where said device comprises a u-shaped frame (3) with a base section (2) and a support section (4), a lever (6) pivotally attached to the frame (3), an aperture (10) in one of the sections, through which aperture (10) a punch rod (8) can move up and down, where said punch rod (8) is pivotally attached to the lever (6), **characterised in that** axle means (16) suitable for fastening a tag storage member (18) is mounted to said frame (3) enabling the tag storage member (18) to rotate about said axle means (16).

2. A device for fixing tags according to claim 1, **characterised in that** the punch rod (8) is biased against the frame (3) by a resilient member (12) and/or that a bushing (14) encases the aperture (10), which bushing (14) may extend outside the aperture (10), and/or that the punch rod (8) includes load transfer means (20), and/or that a spacer pipe (13) enclosing the punch rod (8), and/or that the frame (3) incorporates a recess (24) to accommodate a pin or spike (28).

3. A device for fixing tags according to any of the claims 1-2, **characterised in that** the support section (4) incorporates at least one guide groove.

4. A device for fixing tags according to any of the claims 1-3, **characterised in that** an actuator (30) is connected to the lever (6).

5. A storage member (18) for use in a device according to claim 1-4, **characterised in that** said storage member (18) includes an annular arrangement (36) having a centrally placed aperture (37), in which annular arrangement (36) one or more loose-fitted tags (26) are placed radially from the aperture (37) such that the punch rod (8) of the tagging device may be vertically arranged over or under an extremity of a tag (26).

6. A u-shaped tag (26) for use in a device according to claim 1-5, where said tag (26) includes a spike (28), where said spike is placed perpendicular and adjacent to a free end of the u-shaped tag, where a tag aperture is provided adjacent and the other free end of the u-shaped tag, where the tag spike (28) points towards the tag aperture (44), where the tag (26) is adapted to be placed in a position in which the punch rod (8) is superposed on the tag spike (28).

7. A device for fixing tags according to any of the claims 1-4, **characterised in that** rotation unit (48) is connected to the frame (3), and/or that a control unit connected to the rotation unit, and/or that the rotation unit comprises an actuator.

8. Method for fixing ear tags to an animal's ear (1) wherein the method includes:
- placing the animals ear (1) between the free ends of a u-shaped tag (26) according to claim 6 or between the free ends of a tag (26) arranged in a storage member (18) according to claim 5 in such a manner that the punch rod (8) of the tagging device is arranged over an extremity of a tag (26) and the punch rod (8) is superposed above the tag (26) having a spike arranged perpendicular and adjacent to a free end of the tag (26);
- squeezing the punch rod (8) in a direction against the ear (1) by which the spike (28) of the ear tag (26) will perforate the ear (1) and the tag aperture (44) to be affixed to the tag aperture (44);
- releasing the pressure on the lever (6) in order to let the lever return to its initial position and thereby releasing the ear of the animal.
